# EUROPEAN PATENT APPLICATION

(11) **EP 2 993 211 A1**
(43) Date of publication of application: **09.03.2016**
(21) Application number: 14200668.3
(22) Date of filing: 30.12.2014
(51) Int. Cl.: C09J 4/00, C09J 133/14, B65D 27/00

(54) **Security envelope and method**

(30) Priority: 02.09.2014 US 201462044996 P
(71) Applicant: Plasto-Sac Ltd., Sderot, 8714631 (IL)
(72) Inventor: Gorelik, Boris, Jerusalem 91451 (IL); Sharmi, Yariv, Petach-Tikva 4958912 (IL)
(74) Representative: Fuchs Patentanwälte Partnerschaft mbB

(57) **Abstract**

There is provided a sealable enclosure having a surface having a cyanoacrylate disposed thereupon, another surface having disposed thereupon an activator compound capable of inducing polymerization of the cyanoacrylate, the two surfaces being positioned or positionable in opposing relationship to one another. Other embodiments are also disclosed.

## Description

### BACKGROUND

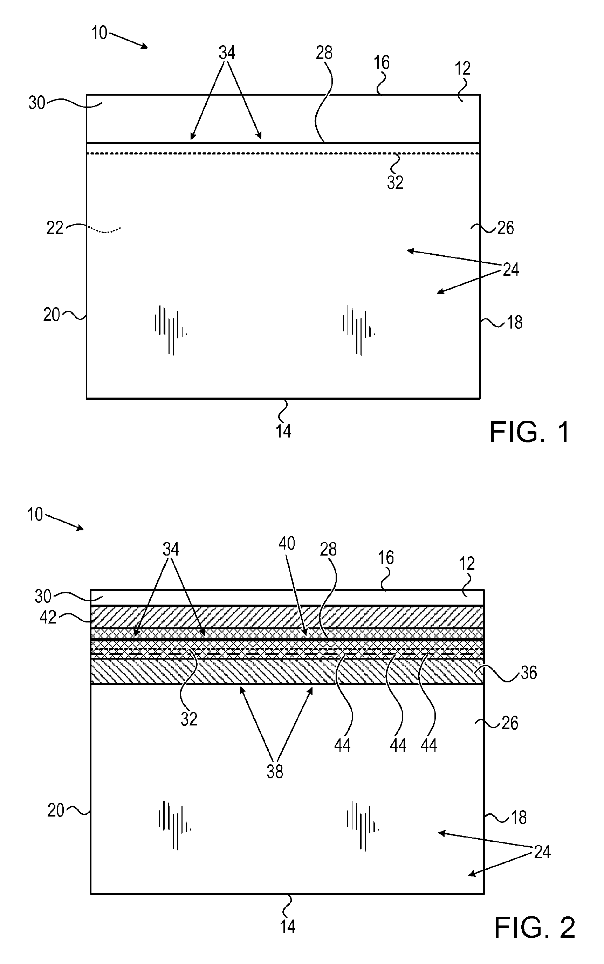

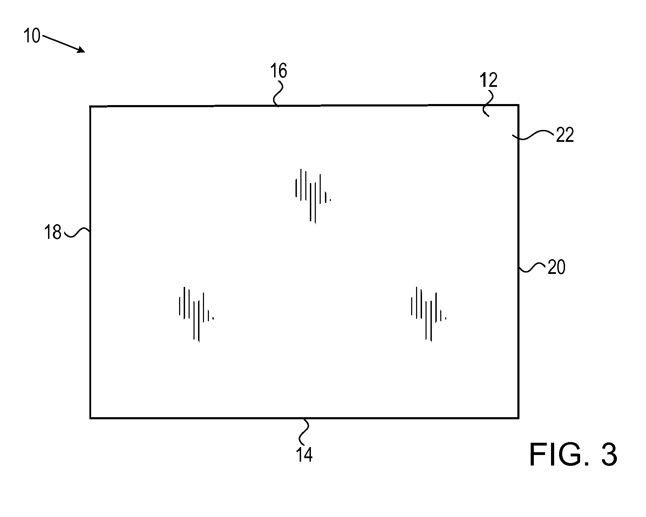

Security envelopes, such as polyolefin security envelopes such as polyethylene (PE) or polypropylene (PP) security envelopes are known in the art. A typical example of a PE security envelope is shown in Figs. 1 - 3. Envelope 10 is formed from a single sheet of polyethylene (PE) 12, which has been folded over itself to provide bottom edge 14 and top edge 16, and sealed at side edges 18 and 20, for example by heat sealing. Back side 22 of envelope 10 is thus a continuous portion of sheet 12. Front side 24 of envelope 10 is formed from portion 26 of sheet 12 which extends from bottom edge 14 toward top edge 16 to terminal edge 28, and from portion 30, also referred to as flap 30, that extends from top edge 16 toward edge 14 and slightly beyond terminal edge 28, where flap 30 terminates at terminal edge 32, which is located between portion 26 and the inner surface of back side 22. Thus slit 34 is formed in front side 24. Optionally, the interior of envelope 10 may be lined with a material other than polyethylene.

A ribbon 36 is affixed along portion 38 thereof to portion 26 of sheet 12 near terminal edge 28, for example by a pressure sensitive adhesive (PSA) that adheres to polyethylene with sufficient strength that once attached to portion 26, ribbon 36 cannot be removed without tearing or otherwise perceptibly deforming envelope 10; in Fig. 2, portion 38 is shown by hatching running to the left from bottom to top. Ribbon 36, which is made of, for example, PE, polypropylene (PP), bioriented polypropylene (BOPP), bioriented polyethylene terephthalate (BOPET), combinations thereof and/or a laminate made from them, co-extruded polyethylene/polyacrylate (PE/PA), and the like, covers the entire width of envelope 10, and is itself of sufficient width that it extends across slit 34. The portion 40 of ribbon 36 facing flap 30 is also provided with a PSA (which may the same or different as the PSA used to attach portion 38 to portion 26 when a PSA is used for such purpose), but this PSA on portion 40 is covered by ribbon 42 which is also formed of, for example, PE, polypropylene (PP), bioriented polypropylene (BOPP), bioriented polyethylene terephthalate (BOPET), combinations thereof, co-extruded PE/PE, and the like, but which has a release coating to facilitate easy removal from the PSAS on portion 40 of ribbon 36, and thus protects the PSA from moisture and/or oxygen and is only removed immediately prior to use. In Fig. 2, the area of overlap between ribbons 36 and 42 is shown by cross-hatching, and the part of ribbon 42 that does not overlap with ribbon 36 is shown by hatching running to the right from bottom to top. Once ribbon 42 is removed from ribbon 36 to reveal the PSA, portion 40 is pressed onto flap 30 so as to seal envelope 10. Ribbon 36 is provided with a plurality of perforations 44 running across the length of ribbon 36. The adhesive forces between ribbon 36 and envelope 10 are such that an attempt to remove ribbon 36 will result in tearing across at least a portion of the perforation, thus indicating that an attempt has been made to tamper with the envelope.

### BRIEF DESCRIPTION OF EMBODIMENTS OF THE INVENTION

There is provided, in accordance with an embodiment of the invention, a sealable enclosure having an opening defined therein, the sealable enclosure having
(1) adjacent to a first side of said opening a first surface, said first surface having disposed thereon one of (a) a cyanoacrylate of the formula CH₂=C(CN)-COOR where R is alkyl and (b) an activator compound capable of inducing polymerization of said cyanoacrylate;
(2) adjacent to a second side of said opening a second surface, said second surface being positioned or positionable in opposing relationship to said first surface whereby, when said second surface is sealed to said first surface, said opening is substantially closed, said second surface having disposed thereupon either (i) an activator compound capable of inducing polymerization of said cyanoacrylate, if said cyanoacrylate is disposed on said first surface or (ii) a cyanoacrylate of the formula CH₂=C(CN)-COOR where R is alkyl, if said activator compound is disposed on said first surface,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

In some embodiments, the sealable enclosure is an envelope. In some embodiments, the PO is selected from polyethylene (PE) and polypropylene. In some embodiments, the PO/EAA is PE/EAA. In some embodiments, at least one of said first surface and said second surface is plasma-treated PO or plasma-treated PO/EAA. In some embodiments, the plasma-treated PO or PO/EAA is selected from the group consisting of plasma-treated PE, plasma-treated PP, and plasma-treated PE/EAA. In some embodiments, R is C₁₋₆ alkyl. In some embodiments, R is methyl. In some embodiments, R is ethyl. In some embodiments, the activator compound is an amine. In some embodiments, the amine is selected from the group consisting of triethylenetetramine, tetraethylenepentamine, diethylaminopropylamine, N-aminoethylpiperazine, m-xylylenediamine, m-phenylenediamine, diaminodiphenylmethane, diaminodiphenylsulfone, isophoronediamine, 2,4,6-tris (dimethylaminomethyl) phenol, p-toluidine, N,N-diethylaniline, and 2,6-di-tert-butyl-4-methyl aniline, and mixtures thereof. In some embodiments, the amine is a derivative of aniline or a mixture of such derivatives. In some embodiments, the amine is selected from the group consisting of p-toluidine, N,N-diethylaniline, and 2,6-di-tert-butyl-4-methyl aniline, and mixtures thereof. In some embodiments, the activator compound is present in a concentration of 10⁻⁹ mole/cm² to 10⁻⁷ mole/cm². In some embodiments, at least the surface upon which said cyanoacrylate is disposed is a plasma-treated surface. In some embodiments, the surface upon which the activator compound is disposed is a plasma-treated surface. In some embodiments, a first acid is mixed in said cyanoacrylate. In some embodiments, the first acid is present in a concentration of 50-100,000 ppm. In some embodiments, the first acid is present in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm. In some embodiments, a second acid is mixed in said activator. In some embodiments, the second acid is present in a concentration of 50-100,000 ppm. In some embodiments, the second acid is present in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm. In some embodiments, the second acid is the same as said first acid. In some embodiments, the surface upon which said cyanoacrylate is disposed is a polymeric surface which contains acid moieties. In some embodiments, the surface upon which said activator is disposed is a polymeric surface which contains acid moieties. In some embodiments, the acid moieties are carboxylic acid moieties. In some embodiments, the carboxylic acid moieties are present as part of coextruded PO/EAA. In some embodiments, the coextruded PO/EAA is coextruded PE/EAA, which optionally has been plasma treated. In some embodiments, the carboxylic acid moieties are present in a concentration of from 0.5 to 9 mol% of the EAA in the coextruded PO/EAA. In some embodiments, the second surface is a ribbon which is affixed to a second side of said opening and extends across said opening. In some embodiments, the ribbon is made of polyethylene PE, polypropylene (PP), bioriented polypropylene (BOPP), bioriented polyethylene terephthalate (BOPET), combinations thereof and/or a laminate made from them, or co-extruded PE/EAA copolymer. In some embodiments, the ribbon has been affixed to said second side of said opening by heat sealing. In some embodiments, the ribbon is affixed to said second side of said opening by a pressure-sensitive adhesive. In some embodiments, the cyanocacrylate is enclosed in a space formed by said first or second surface and a piece of material which is removably attached to said first or second surface. In some embodiments, the piece of material is formed from PE or co-extruded PE/EAA. In some embodiments, the space is formed by said second surface and said piece of material. In some embodiments, the piece of material is attached to said first or second surface so as to form a plurality of discrete spaces, at least two of which enclose cyanoacrylate therein. In some embodiments, the piece of material is removably attached to said first or second surface by heat sealing. In some embodiments, the piece of material is removably attached to said first or second surface by a PSA. In some embodiments, the piece of material is removably attached to said first or second surface by a combination of heat sealing and PSA.

There is also provided, in accordance with an embodiment of the invention, a method for preparing an enclosure having an opening defined therein for sealing, comprising:
(1) forming a cyanoacrylate-bearing first surface adjacent to a first side of said opening, the cyanoacrylate having the formula CH₂=C(CN)-COOR where R is alkyl; and
(2) forming an activator-bearing second surface adjacent to a second side of said opening, which second surface is positioned or positionable in opposing relationship to said first surface whereby, when said second surface is sealed to said first surface, said opening is substantially closed, said activator being a compound capable of inducing polymerization of said cyanoacrylate,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

There is also provided, in accordance with an embodiment of the invention, a method for preparing an enclosure having an opening defined therein for sealing, comprising:
(1) forming an activator-bearing first surface adjacent to a first side of said opening, the activator being a compound capable of inducing polymerization in a cyanoacrylate of the formula CH₂=C(CN)-COOR where R is alkyl; and
(2) forming a cyanoacrylate-bearing second surface adjacent to a second side of said opening, which second surface is positioned or positionable in opposing relationship to said first surface whereby, when said second surface is sealed to said first surface, said opening is substantially closed, said cyanoacrylate being of the formula CH₂=C(CN)-COOR where R is alkyl,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

There is also provided, in accordance with an embodiment of the invention, a method for preparing an enclosure having an opening defined therein for sealing, the enclosure having either
(i) a cyanoacrylate-bearing first surface adjacent to a first side of said opening, the cyanoacrylate having the formula CH₂=C(CN)-COOR where R is alkyl, or
(ii); an activator-bearing first surface adjacent to a first side of said opening, the activator being a compound capable of inducing polymerization in a cyanoacrylate of the formula CH₂=C(CN)-COOR where R is alkyl;
the method comprising:
(a) if the enclosure has a cyanoacrylate-bearing first surface, forming an activator-bearing second surface adjacent to a second side of said opening, which second surface is positioned or positionable in opposing relationship to said first surface whereby, when said second surface is sealed to said first surface, said opening is substantially closed, said activator being a compound capable of inducing polymerization of said cyanoacrylate, or
(b) if the enclosure has an activator-bearing first surface, forming a cyanoacrylate-bearing second surface adjacent to a second side of said opening, which second surface is positioned or positionable in opposing relationship to said first surface whereby, when said second surface is sealed to said first surface, said opening is substantially closed, said cyanoacrylate being of the formula CH₂=C(CN)-COOR where R is alkyl;
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

There is also provided, in accordance with an embodiment of the invention, a method for preparing an enclosure having an opening defined therein for sealing, the enclosure having either
(a) an activator-bearing second surface adjacent to a second side of said opening, which second surface is positioned or positionable in opposing relationship to a first surface adjacent to a first side of said opening whereby, when said second surface is sealed to said first surface, said opening is substantially closed, said activator being a compound capable of inducing polymerization of a cyanoacrylate of the formula CH₂=C(CN)-COOR where R is alkyl, or
(b) a cyanoacrylate-bearing second surface adjacent to a second side of said opening, which second surface is positioned or positionable in opposing relationship to said first surface adjacent to a first side of said opening whereby, when said second surface is sealed to said first surface, said opening is substantially closed, said cyanoacrylate being of the formula CH₂=C(CN)-COOR where R is alkyl;
the method comprising:
(i) if the enclosure has an activator-bearing second surface, forming a cyanoacrylate-bearing first surface adjacent to a first side of said opening, the cyanoacrylate having the formula CH₂=C(CN)-COOR where R is alkyl, or
(ii); if the enclosure has a cyanoacrylate-bearing second surface, forming an activator-bearing first surface adjacent to a first side of said opening, the activator being a compound capable of inducing polymerization in a cyanoacrylate of the formula CH₂=C(CN)-COOR where R is alkyl;
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

There is also provided, in accordance with an embodiment of the invention, a method of sealing an enclosure having an opening defined therein, the enclosure having
(1) adjacent to a first side of said opening a first surface, said first surface having disposed thereon one of (a) a cyanoacrylate of the formula CH₂=C(CN)-COOR where R is alkyl and (b) an activator compound capable of inducing polymerization of said cyanoacrylate;
(2) adjacent to a second side of said opening a second surface, said second surface being positioned or positionable in opposing relationship to said first surface whereby, when said second surface is sealed to said first surface, said opening is substantially closed, said second surface having disposed thereupon either (i) an activator compound capable of inducing polymerization of said cyanoacrylate, if said cyanoacrylate is disposed on said first surface or (ii) a cyanoacrylate of the formula CH₂=C(CN)-COOR where R is alkyl, if said activator compound is disposed on said first surface,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA),
the method comprising bringing said cyanoacrylate and said activator into contact with each other while each is disposed on its respective surface.

In some embodiments, in any of the above-described methods, said enclosure is an envelope. In some embodiments, the PO is selected from polyethylene (PE) and polypropylene. In some embodiments, the PO/EAA is PE/EAA. In some embodiments, at least one of said first surface and said second surface is plasma-treated PO or plasma-treated PO/EAA. In some embodiments, the plasma-treated PO or PO/EAA is selected from the group consisting of plasma-treated PE, plasma-treated PP, and plasma-treated PE/EAA. In some embodiments, R is C₁₋₆ alkyl. In some embodiments, R is methyl. In some embodiments, R is ethyl. In some embodiments, the activator compound is an amine. In some embodiments, the amine is selected from the group consisting of triethylenetetramine, tetraethylenepentamine, diethylaminopropylamine, N-aminoethylpiperazine, m-xylylenediamine, m-phenylenediamine, diaminodiphenylmethane, diaminodiphenylsulfone, isophoronediamine, 2,4,6-tris (dimethylaminomethyl) phenol, p-toluidine, N,N-diethylaniline, and 2,6-di-tert-butyl-4-methyl aniline, and mixtures thereof. In some embodiments, the amine is a derivative of aniline or a mixture of such derivatives. In some embodiments, the amine is selected from the group consisting of p-toluidine, N,N-diethylaniline, and 2,6-di-tert-butyl-4-methyl aniline, and mixtures thereof. In some embodiments, the activator compound is present in a concentration of 10⁻⁹ mole/cm² to 10⁻⁷ mole/cm². In some embodiments, at least the surface upon which said cyanoacrylate is disposed is a plasma-treated surface. In some embodiments, the surface upon which said activator compound is disposed is a plasma-treated surface. In some embodiments, a first acid is mixed in said cyanoacrylate. In some embodiments, the first acid is present in a concentration of 50-100,000 ppm. In some embodiments, the first acid is present in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm. In some embodiments, a second acid is mixed in said activator. In some embodiments, the second acid is present in a concentration of 50-100,000 ppm. In some embodiments, the second acid is present in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm. In some embodiments, the second acid is the same as said first acid. In some embodiments, the surface upon which said cyanoacrylate is disposed is a polymeric surface which contains acid moieties. In some embodiments, the surface upon which said activator is disposed is a polymeric surface which contains acid moieties. In some embodiments, the acid moieties are carboxylic acid moieties. In some embodiments, the carboxylic acid moieties are present as part of coextruded PO/EAA. In some embodiments, the coextruded PO/EAA is coextruded PE/EAA, which optionally has been plasma treated. In some embodiments, the carboxylic acid moieties are present in a concentration of from 0.5 to 9 mol% of the EAA in the coextruded PO/EAA. In some embodiments, the second surface is a ribbon which is affixed to a second side of said opening and extends across said opening. In some embodiments, the ribbon is made of polyethylene PE, polypropylene (PP), bioriented polypropylene (BOPP), bioriented polyethylene terephthalate (BOPET), combinations thereof and/or a laminate made from them, or co-extruded PE/EAA copolymer. In some embodiments, the ribbon has been affixed to said second side of said opening by heat sealing. In some embodiments, the ribbon is affixed to said second side of said opening by a pressure-sensitive adhesive. In some embodiments, the cyanocacrylate is enclosed in a space formed by said first or second surface and a piece of material which is removably attached to said first or second surface. In some embodiments, the piece of material is formed from PE or co-extruded PE/EAA. In some embodiments, the space is formed by said second surface and said piece of material. In some embodiments, the piece of material is attached to said first or second surface so as to form a plurality of discrete spaces, at least two of which enclose cyanoacrylate therein. In some embodiments, the piece of material is removably attached to said first or second surface by heat sealing. In some embodiments, the piece of material is removably attached to said first or second surface by a PSA. In some embodiments, the piece of material is removably attached to said first or second surface by a combination of heat sealing and PSA.

### BRIEF DESCRIPTION OF THE DRAWINGS

Embodiments of the invention will be better understood through the following description and with reference to the drawings, in which:
Figs. 1-3 show an embodiment of a prior art polyethyelene security envelope;
Figs. 4A and 4B show an embodiment of a polyethyelene security envelope in accordance with an embodiment of the invention;
Figs. 5A and 5B show one way of sealing cyanoacrylate between two ribbons in accordance with an embodiment of the invention;
Figs. 6A and 6B show another way of sealing cyanoacrylate between two ribbons in accordance with an embodiment of the invention;

### DETAILED DESCRIPTION

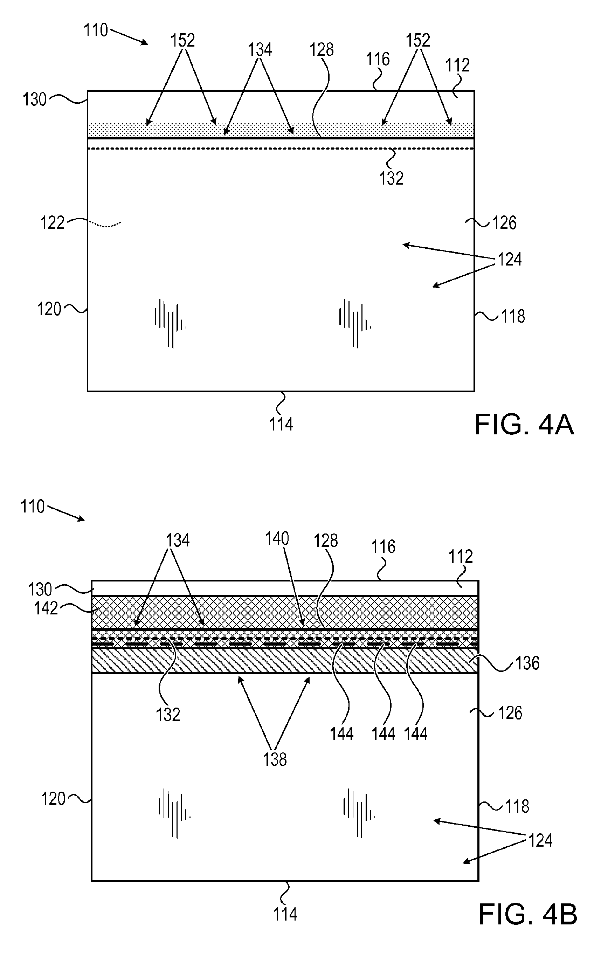

Figs. 4A and 4B show an embodiment of the presently claimed invention, as used in the case of a PE envelope like that shown in Fig. 1. Polyethylene envelope 110 is similar to envelope 10, being formed from a single sheet of polyethylene (PE) 112, which has been folded over itself to provide bottom edge 114 and top edge 116, and sealed on side edges 118 and 120, for example by heat sealing. Back side 122 of envelope 110 is thus a continuous portion of sheet 112. Front side 124 of envelope 110 is formed from portion 126 of sheet 112 which extends from bottom edge 114 toward top edge 116 to terminal edge 128, and from portion 130, also referred to as flap 130, that extends from top edge 116 toward edge 114 and slightly beyond terminal edge 128, where flap 130 terminates at terminal edge 132, which is located between portion 126 and the inner surface of back side 122. Thus slit 134 is formed in front side 124.

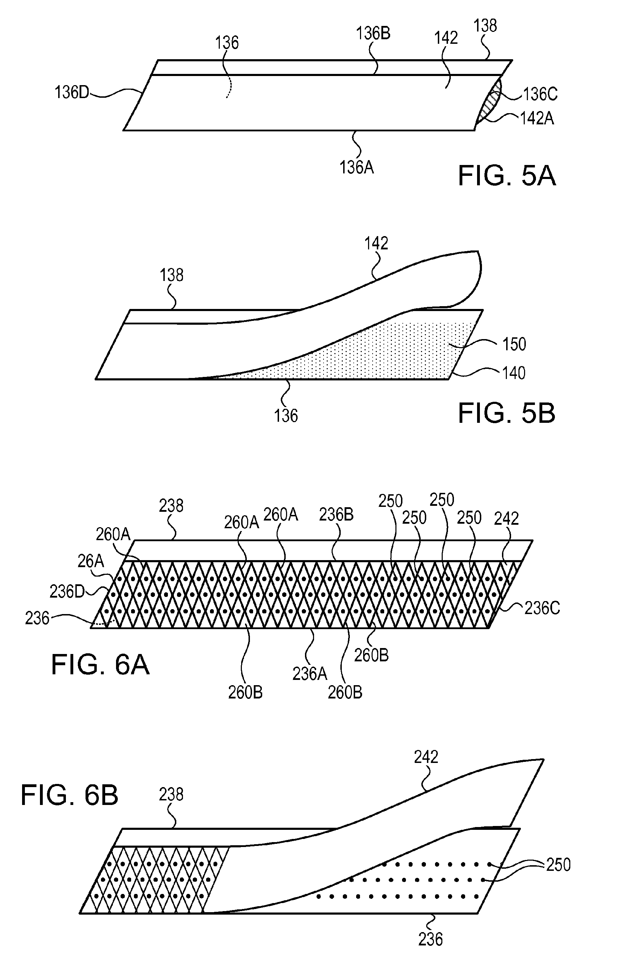

As in Figs. 1-3, a ribbon 136 (an example of which is shown in Figs. 5A and 5B) is affixed along portion 138 of sheet 112 to portion 126 of sheet 112 near terminal edge 128, for example by a pressure sensitive adhesive (PSA); in Fig. 4B, portion 138 is shown by hatching running to the left from bottom to top. Ribbon 136, which is made of PE or co-extruded PE/ethylene acrylic acid or the like, covers the entire width of envelope 110, and is itself of sufficient width that it extends across slit 134. However, the manner of sealing portion 140 of ribbon 136 facing flap 130 to flap 130 is different than the manner of sealing portion 40 of ribbon 36 to flap 30. Disposed on portion 140 is a layer of cyanoacrylate (CA) monomer 150 of formula NC-C(=CH₂)-COOR, where R is alkyl, e.g. a C₁₋₆ alkyl, for example methyl or ethyl. Monomer 150 is separated from the environment by a ribbon 142 or other means, as will be explained in greater detail below; like ribbon 136, ribbon 142 may be made of PE or co-extruded PE/ethylene acrylic acid or the like. In Fig. 4B, the area of overlap between ribbons 136 and 142 are depicted by cross-hatching. The layer of cyanoacrylate monomer may be of a thickness of 0.1 micron to 100 microns, e.g. 1 micron to 30 microns. In some embodiments, as will be explained below, the CA monomer may be present as a plurality of spaced-apart units, such as dots; in other embodiments, the CA monomer may be present as an essentially continuous body.

Disposed on the part of flap 130 facing portion 140 is an activator compound 152 (represented in Fig. 4A by stippling) which will activate polymerization of the cyanoacrylate when brought into contact therewith. Whether the activator compound is anionic or neutral, it should be a nucleophile for the methylene carbon of the CA monomer, i.e. it should be able to readily provide an electron pair to form a bond at the methylene carbon of the CA monomer. See the figure below, which illustrates the process schematically for an anion and a neutral species:

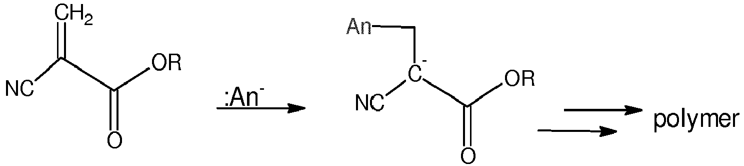

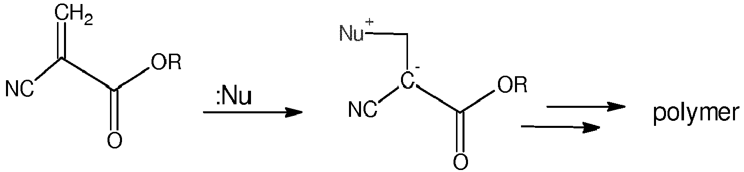

Preferably the activator is an amine such as for example triethylenetetramine, tetraethylenepentamine, diethylaminopropylamine, N-aminoethylpiperazine, m-xylylenediamine, m-phenylenediamine, diaminodiphenylmethane, diaminodiphenylsulfone, isophoronediamine, and 2,4,6-tris (dimethylaminomethyl) phenol. Derivatives of aniline, such as p-toluidine, N,N-diethylaniline, and 2,6-di-tert-butyl-4-methyl aniline, and mixtures thereof, such as a 50:50 molar mixture of p-toluidine and N,N-diethyl aniline, have been found to be particularly useful. The activator may be applied to the surface of flap 130 by, for example, spraying or printing. Application by spraying may be achieved by dissolving the activator compound in a low boiling point solvent and spraying as necessary. For example, toluidine may be dissolved in hexane, acetone, or an appropriate fluorocarbon such as 1,2-difluoropropane. The presence of the activator on the envelope 10 may be detected for example using attenuated total reflectance Fourier transform infrared spectroscopy (ATR-FTIR) or Raman spectroscopy, which can be used online during production of a plurality of envelopes as part of a quality control procedure.

Immediately prior to use, the cyanoacrylate is exposed by removal of ribbon 142, and then the CA is brought into contact with the activator. At temperatures in the range of 18-30°C, this results in mixing of CA and activator and resultant polymerization of the CA, creating a strong bond between portion 140 of ribbon 136 and flap 130, within a relatively short period of time, for example not more than ten minutes, not more than nine minutes, not more than eight minutes, not more than five minutes, not more than four minutes, not more than three minutes, not more than two minutes or not more than one minute from the time at which at the CA and activator are mixed. In some cases the polymerization and formation of the bond takes at least 15 second, at least 30 seconds, at least 45 second or at least 60 seconds.

Cyanoacrylate has a higher surface energy than polyethylene. Thus, when ribbon 136 is made of PE, it desirable to increase the surface energy of the face of ribbon 136 on which the CA is present prior to placing the cyanoacrylate on that face, in order to improve the adhesion of the cyanoacrylate to the ribbon 136. This may be achieved, for example, via plasma treatment, e.g. Corona treatment, in order to form oxidized groups on the PE surface, thus increasing its surface energy. Alternatively, if the ribbon 136 is made of co-extruded polyethylene/ethylene acrylic acid copolymer (PE/EAA), the cyanoacrylate will be attracted to the EAA. An additional advantage of using co-extruded PE and EAA is described below. Co-extruded PE/EAA may also itself be plasma treated to increase the concentration of acidic groups presented. In another variation, ethylene-vinyl acetate (EVA, the copolymer of ethylene and vinyl acetate) may be used, provided that it is plasma treated to facilitate adhesion of the CA to the EVA.

It will be often be desirable to include an acid with the cyanoacrylate in order to stabilize this material, for example in a concentration of 50-100,000 ppm. Such acids may be Lewis acids or Bronsted acids. Examples of suitable acids are acetic acid, zinc chloride, citric acid, tartaric acid, phosphoric acid and mixtures thereof. In the case in which the CA is placed on co-extruded PE/EAA, the acrylic acid moieties may also act as a stabilizer for the CA. It will also be appreciated that if the surface on which the activator is present contains acrylic acid groups, e.g. co-extruded PE/ EAA, the carboxylic acid groups may form salts with the activator, thus stabilizing it as well.

Commercially available cyanoacrylates typically have a gel-like consistency at room temperature, due to the inclusion of one or more thickening agents in the mixture. Thus, Figs. 5A and 5B show one way of enclosing the cyanoacrylate: the CA is deposited on part of ribbon 136, and is enclosed between ribbon 136 and ribbon 142 by sealing of ribbon 142 to ribbon 136 along length-wise edges 136A and 136B as well as along width-wise edges 136C and 136D, in a manner that protects the CA from the outside (e.g. keeps out moisture) but facilitates removal of ribbon 142 when desired, for example by pulling on tab 142A. As shown in Figs. 5A and 5B, portion 138 of ribbon 136, which as shown in Fig. 4B is used to affix ribbon 136 to the envelope, is not covered by ribbon 142, although it will be appreciated that other arrangements are possible.

In an alternative embodiment, shown in Figs. 6A and 6B, a plurality of drops of CA 250 are disposed on ribbon 236 in a defined pattern, such as alternating rows, and ribbon 242 is releasably sealed thereover in a manner that entraps each drop between ribbons 236 and 242, for example using a PSA along the lines denoted 260A and 260B, or by creating a heat seal along lines 260A and 260B which can be broken by pulling on ribbon 242. Optionally, a releaseable seal may also be formed between ribbons 236 and 242 along edges 236A, 236B, 236C and 236D, for examples by use of a PSA or by heat sealing. Ribbon 242 is removed to expose the CA so that the CA may be brought into contact with the activator. It will be appreciated that although CA drops 250 are located between ribbons 236 and 242 and therefore their exact location is not necessarily visible to a person viewing these ribbons, for the sake of illustration in Figs. 6A and 6B these drop are shown both when ribbon 242 is sealed to ribbon 236 and when ribbon 242 is partially removed from ribbon 236.

It will be appreciated that envelopes such as envelope 110 may be manufactured in a continuous process, as is well-known in the art. In such a case, depending on the manufacturing process used, it may be desired to for a ribbon such as ribbon 136 or 236 to be made in a continuous process that is conducted in tandem with the formation of envelope 110, so that ribbon 136 or 236 is attached to envelope 110 as envelope 110 is formed; or alternatively it may be desired to utilize pre-formed ribbons 136 or 236, either pre-cut or on a roll ready for synchronous cutting with the formation of the envelope 110. Likewise, if for some reason it is desired to first form a plurality of envelopes 110 and afterward attach the CA-bearing ribbons thereto, ribbon 136 or 236 may likewise be pre-formed, either pre-cut or on roll ready for cutting as each envelope 110 has a ribbon 136 of 236 attached thereto; or ribbon 136 or 236 may be formed in a continuous process and attached to the envelope as ribbon 136 or 236 is formed. Furthermore, in some embodiments, it may prove most cost-efficient to utilize a third ribbon (not shown_, to attach ribbon 136 or 236 to the envelope; this third ribbon may be e.g. a polyolefin ribbon such as PE or PP having a PSA disposed on both sides, so that this third ribbon (which would then effectively act as a piece of double-sided tape) is attached directly to the envelope and ribbon 136 or 236 is attached to the third ribbon.

It will be appreciated that in some embodiments, a ribbon 136 or 236 need not be employed. Instead, the portions of envelope 10 to which the CA and activator are to be applied may be plasma treated and then the CA and activator directly applied thereto, with the CA being sealed in place by a removable ribbon 342 (not shown). Alternatively, a co-extruded layer of PE/EAA, or EVA (which is then plasma treated), may be applied to sheet 112 at the location where it is desired to dispose the CA and optionally at the location where it is desired to dispose the activator; such a co-extruded layer may be of for example 1-100 micrometers thickness, e.g. 3-100 micrometers thickness.

It will also be appreciated that although in the figures, the activator is shown as being located on flap 130 near slit 134 of envelope 110 and the CA on the ribbon 136 or on the interior of portion 124 of envelope 110 near slit 134, in principle the positions of the activator and CA may be reversed. Similarly, instead of being located near one end of the envelope, slit 134 could be located elsewhere, for example closer to the middle of the envelope, or the slit could be located at an edge so that the envelope could simply have a flap that folds over the slit. The envelope could also be formed without a flap but with opposed surfaces on which the CA and activator are disposed. In addition, while the drawings shown herein depict a substantially flat envelope, the envelope could instead be of a different shape.

The seal formed by the polymerization of the CA is such that if an attempt is made to break the seal, this will be evident to an observer, as the area of the envelope around the seal will be deformed or torn. Furthermore, it will be appreciated that by manufacture of the area around the seal with a material having, for example, a softening temperature lower than the softening temperature of the polymerized CA (or of a PSA seal, if one more PSAs are used to hold ribbons on which the CA and/or activator are disposed), or if the material has a significant lower viscosity than the polymer CA or PSA at this temperature, then the opening of a polymerized CA or PSA seal by heat will not be possible without detection, since this will result in deformation of the envelope in at least the vicinity of envelope adjacent to the polymerized CA or PSA seal.

While the discussion above focused on a PE envelope, in principle a different polyolefin, such as PP, could be used. Moreover, although envelope 110 is shown as a single piece of material, this need not necessarily be the case. For example, the envelope could be made from different materials, e.g. the front portion could be made from a polyolefin such as PE or PP, but the back portion could be made from a different polyolefin, or the back could be made from a mesh material, such as a non-woven or woven mesh. Part of the envelope may be opaque in the visible light spectrum, and part of the envelope may be transparent in the visible light spectrum. It will also be appreciated that the envelope may be made primarily from a material other than polyolefin, provided that the portions of the envelope (or the ribbons) on which the CA and the activator are disposed are themselves polyolefins, co-extruded PO/EAA, or EVA, appropriately treated, if necessary (for example by plasma treatment) to ensure sufficient adhesion between the CA- and activator-bearing portions when these portions are brought into mutual contact. In another variation, the envelope, or parts of it, may be made from a heat-sealable laminate, which has an outer layer of polyolefin, co-extruded polyolefin/EAA, such as co-extruded PE/EAA, or EVA, plasma treated as necessary. Such a laminate may include in its inner layers other polymers or materials, such as polymers which alone may be unsuitable as a material on which to place the CA monomer or the activator, for example because of high hygroscopicity, but which can be used in embodiments of the present invention by virtue of the presence of a polyolefin or co-extruded polyolefin/EAA, or plasma-treated EVA, interposed between the layer of unsuitable polymer(s) and the CA monomer or activator.

The following items relate to preferred embodiments of this invention. Preferred item 1 relates to a sealable enclosure having an opening defined therein, the sealable enclosure having
(1) adjacent to a first side of said opening a first surface, said first surface having disposed thereon one of (a) a cyanoacrylate of the formula CH₂=C(CN)-COOR where R is alkyl and (b) an activator compound capable of inducing polymerization of said cyanoacrylate;
(2) adjacent to a second side of said opening a second surface, said second surface being positioned or positionable in opposing relationship to said first surface whereby, when said second surface is sealed to said first surface, said opening is substantially closed, said second surface having disposed thereupon either (i) an activator compound capable of inducing polymerization of said cyanoacrylate, if said cyanoacrylate is disposed on said first surface or (ii) a cyanoacrylate of the formula CH₂=C(CN)-COOR where R is alkyl, if said activator compound is disposed on said first surface,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

According to preferred item 2, item 1 is an envelope. According to preferred item 3, said PO of the sealable enclosure of item 1 or 2 is selected from polyethylene (PE) and polypropylene. According to preferred item 4 said PO/EAA of the sealable enclosure of any one of items 1 to 3 is PE/EAA. A preferred item 5 relates to the sealable enclosure of any one of items 1 to 4 wherein at least one of said first surface and said second surface is plasma-treated PO or plasma-treated PO/EAA. A preferred item 6 relates to the sealable enclosure of item 5 wherein said plasma-treated PO or PO/EAA is selected from the group consisting of plasma-treated PE, plasma-treated PP, and plasma-treated PE/EAA. A preferred item 7 relates to the sealable enclosure of any one of items 1 to 6, wherein R is C₁₋₆ alkyl. A preferred item 8 relates to the sealable enclosure of item 7, wherein R is methyl. A preferred item 9 relates to the sealable enclosure of item 7, wherein R is ethyl. A preferred item 10 relates to the sealable enclosure of any one of items 1 to 9, wherein said activator compound is an amine. A preferred item 11 relates to the sealable enclosure of item 10, wherein said amine is selected from the group consisting of triethylenetetramine, tetraethylenepentamine, diethylaminopropylamine, N-aminoethylpiperazine, m-xylylenediamine, m-phenylenediamine, diaminodiphenylmethane, diaminodiphenylsulfone, isophoronediamine, 2,4,6-tris (dimethylaminomethyl) phenol, p-toluidine, N,N-diethylaniline, and 2,6-di-tert-butyl-4-methyl aniline, and mixtures thereof. A preferred item 12 relates to the sealable enclosure of item 11, wherein the amine is a derivative of aniline or a mixture of such derivatives. A preferred item 13 relates to the sealable enclosure of item 11 or 12, wherein the amine is selected from the group consisting of p-toluidine, N,N-diethylaniline, and 2,6-di-tert-butyl-4-methyl aniline, and mixtures thereof. A preferred item 14 relates to the sealable enclosure of any one of items 1 to 13 wherein the activator compound is present in a concentration of 10⁻⁹ mole/cm² to 10⁻⁷ mole/cm². A preferred item 15 relates to the sealable enclosure of any one of items 1 to 13, wherein at least the surface upon which said cyanoacrylate is disposed is a plasma-treated surface. A preferred item 16 relates to the sealable enclosure of item 15, wherein the surface upon which said activator compound is disposed is a plasma-treated surface. A preferred item 17 relates to the sealable enclosure of any one of items 1 to 16, wherein a first acid is mixed in said cyanoacrylate. A preferred item 18 relates to the sealable enclosure of item 17, wherein said first acid is present in a concentration of 50-100,000 ppm. A preferred item 19 relates to the sealable enclosure of item 18, wherein said first acid is present in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm. A preferred item 20 relates to the sealable enclosure of any one of items 1 to 19, wherein a second acid is mixed in said activator. A preferred item 21 relates to the sealable enclosure of item 20, wherein said second acid is present in a concentration of 50-100,000 ppm. A preferred item 22 relates to the sealable enclosure of item 21, wherein said second acid is present in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm. A preferred item 23 relates to the sealable enclosure any one of items 20 to 22 wherein said second acid is the same as said first acid. A preferred item 24 relates to the sealable enclosure of any one of items 1 to 23, wherein the surface upon which said cyanoacrylate is disposed is a polymeric surface which contains acid moieties. A preferred item 25 relates to the sealable enclosure of any one of items 1 to 24 wherein the surface upon which said activator is disposed is a polymeric surface which contains acid moieties. A preferred item 26 relates to the sealable enclosure of item 24 or 25 wherein said acid moieties are carboxylic acid moieties. A preferred item 27 relates to the sealable enclosure of item 26 wherein said carboxylic acid moieties are present as part of coextruded PO/EAA. A preferred item 28 relates to the sealable enclosure of item 27 wherein said coextruded PO/EAA is coextruded PE/EAA, which optionally has been plasma treated. A preferred item 29 relates to the sealable enclosure of item 27 or 28 wherein said carboxylic acid moieties are present in a concentration of from 0.5 to 9 mol% of the EAA in the coextruded PO/EAA. A preferred item 30 relates to the sealable enclosure of any one of items 1 to 29 wherein said second surface is a ribbon which is affixed to a second side of said opening and extends across said opening. A preferred item 31 relates to the sealable enclosure of item 30, wherein said ribbon is made of polyethylene PE, polypropylene (PP), bioriented polypropylene (BOPP), bioriented polyethylene terephthalate (BOPET), combinations thereof and/or a laminate made from them, or co-extruded PE/EAA copolymer. A preferred item 32 relates to the sealable enclosure of item 30 or 31 wherein said ribbon has been affixed to said second side of said opening by heat sealing. A preferred item 33 relates to the sealable enclosure of item 30 or 31 wherein said ribbon is affixed to said second side of said opening by a pressure-sensitive adhesive. A preferred item 34 relates to the sealable enclosure according to any one of items 1 to 33 wherein said cyanocacrylate is enclosed in a space formed by said first or second surface and a piece of material which is removably attached to said first or second surface. A preferred item 35 relates to the sealable enclosure of item 34 wherein said piece of material is formed from PE or co-extruded PE/EAA. A preferred item 36 relates to the sealable enclosure of item 34 or 35 wherein said space is formed by said second surface and said piece of material. A preferred item 37 relates to the sealable enclosure of any one of items 34 to 36 wherein said piece of material is attached to said first or second surface so as to form a plurality of discrete spaces, at least two of which enclose cyanoacrylate therein. A preferred item 38 relates to the sealable enclosure of any one of items 34 to 37 wherein said piece of material is removably attached to said first or second surface by heat sealing. A preferred item 39 relates to the sealable enclosure of any one of items 34 to 37 wherein said piece of material is removably attached to said first or second surface by a PSA. A preferred item 40 relates to the sealable enclosure of any one of items 34 to 39 wherein said piece of material is removably attached to said first or second surface by a combination of heat sealing and PSA.

A preferred item 41 relates to a method for preparing an enclosure having an opening defined therein for sealing, comprising:
(1) forming a cyanoacrylate-bearing first surface adjacent to a first side of said opening, the cyanoacrylate having the formula CH₂=C(CN)-COOR where R is alkyl; and
(2) forming an activator-bearing second surface adjacent to a second side of said opening, which second surface is positioned or positionable in opposing relationship to said first surface whereby, when said second surface is sealed to said first surface, said opening is substantially closed, said activator being a compound capable of inducing polymerization of said cyanoacrylate,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

A preferred item 42 relates to a method for preparing an enclosure having an opening defined therein for sealing, comprising:
(1) forming an activator-bearing first surface adjacent to a first side of said opening, the activator being a compound capable of inducing polymerization in a cyanoacrylate of the formula CH₂=C(CN)-COOR where R is alkyl; and
(2) forming a cyanoacrylate-bearing second surface adjacent to a second side of said opening, which second surface is positioned or positionable in opposing relationship to said first surface whereby, when said second surface is sealed to said first surface, said opening is substantially closed, said cyanoacrylate being of the formula CH₂=C(CN)-COOR where R is alkyl,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

A preferred item 43 relates to a method for preparing an enclosure having an opening defined therein for sealing, the enclosure having either
(i) a cyanoacrylate-bearing first surface adjacent to a first side of said opening, the cyanoacrylate having the formula CH₂=C(CN)-COOR where R is alkyl, or
(ii); an activator-bearing first surface adjacent to a first side of said opening, the activator being a compound capable of inducing polymerization in a cyanoacrylate of the formula CH₂=C(CN)-COOR where R is alkyl;
the method comprising:
(a) if the enclosure has a cyanoacrylate-bearing first surface, forming an activator-bearing second surface adjacent to a second side of said opening, which second surface is positioned or positionable in opposing relationship to said first surface whereby, when said second surface is sealed to said first surface, said opening is substantially closed, said activator being a compound capable of inducing polymerization of said cyanoacrylate, or
(b) if the enclosure has an activator-bearing first surface, forming a cyanoacrylate-bearing second surface adjacent to a second side of said opening, which second surface is positioned or positionable in opposing relationship to said first surface whereby, when said second surface is sealed to said first surface, said opening is substantially closed, said cyanoacrylate being of the formula CH₂=C(CN)-COOR where R is alkyl;
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

A preferred item 44 relates to a method for preparing an enclosure having an opening defined therein for sealing, the enclosure having either
(a) an activator-bearing second surface adjacent to a second side of said opening, which second surface is positioned or positionable in opposing relationship to a first surface adjacent to a first side of said opening whereby, when said second surface is sealed to said first surface, said opening is substantially closed, said activator being a compound capable of inducing polymerization of a cyanoacrylate of the formula CH₂=C(CN)-COOR where R is alkyl, or
(b) a cyanoacrylate-bearing second surface adjacent to a second side of said opening, which second surface is positioned or positionable in opposing relationship to said first surface adjacent to a first side of said opening whereby, when said second surface is sealed to said first surface, said opening is substantially closed, said cyanoacrylate being of the formula CH₂=C(CN)-COOR where R is alkyl;
the method comprising:
(i) if the enclosure has an activator-bearing second surface, forming a cyanoacrylate-bearing first surface adjacent to a first side of said opening, the cyanoacrylate having the formula CH₂=C(CN)-COOR where R is alkyl, or
(ii); if the enclosure has a cyanoacrylate-bearing second surface, forming an activator-bearing first surface adjacent to a first side of said opening, the activator being a compound capable of inducing polymerization in a cyanoacrylate of the formula CH₂=C(CN)-COOR where R is alkyl;
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

A preferred item 45 relates to a method of sealing an enclosure having an opening defined therein, the enclosure having
(1) adjacent to a first side of said opening a first surface, said first surface having disposed thereon one of (a) a cyanoacrylate of the formula CH₂=C(CN)-COOR where R is alkyl and (b) an activator compound capable of inducing polymerization of said cyanoacrylate;
(2) adjacent to a second side of said opening a second surface, said second surface being positioned or positionable in opposing relationship to said first surface whereby, when said second surface is sealed to said first surface, said opening is substantially closed, said second surface having disposed thereupon either (i) an activator compound capable of inducing polymerization of said cyanoacrylate, if said cyanoacrylate is disposed on said first surface or (ii) a cyanoacrylate of the formula CH₂=C(CN)-COOR where R is alkyl, if said activator compound is disposed on said first surface,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA),
the method comprising bringing said cyanoacrylate and said activator into contact with each other while each is disposed on its respective surface.

A preferred item 46 relates to the method of any one of items 41 to 45 wherein said enclosure is an envelope. A preferred item 47 relates to the method of any one of items 41 to 46 wherein said PO is selected from polyethylene (PE) and polypropylene. A preferred item 48 relates to the method of any one of items 41 to 47 wherein said PO/EAA is PE/EAA. A preferred item 49 relates to the method of any one of items 41 to 48 wherein at least one of said first surface and said second surface is plasma-treated PO or plasma-treated PO/EAA. A preferred item 50 relates to the method of item 49 wherein said plasma-treated PO or PO/EAA is selected from the group consisting of plasma-treated PE, plasma-treated PP, and plasma-treated PE/EAA. A preferred item 51 relates to the method of any one of items 41 to 50, wherein R is C₁₋₆ alkyl. A preferred item 52 relates to the method of item 51, wherein R is methyl. A preferred item 53 relates to the method of item 51, wherein R is ethyl. A preferred item 54 relates to the method of any one of items 41 to 53, wherein said activator compound is an amine. A preferred item 55 relates to the method of item 54, wherein said amine is selected from the group consisting of triethylenetetramine, tetraethylenepentamine, diethylaminopropylamine, N-aminoethylpiperazine, m-xylylenediamine, m-phenylenediamine, diaminodiphenylmethane, diaminodiphenylsulfone, isophoronediamine, 2,4,6-tris (dimethylaminomethyl) phenol, p-toluidine, N,N-diethylaniline, and 2,6-di-tert-butyl-4-methyl aniline, and mixtures thereof. A preferred item 56 relates to the method of item 55, wherein the amine is a derivative of aniline or a mixture of such derivatives. A preferred item 57 relates to the method of item 54 or 55, wherein the amine is selected from the group consisting of p-toluidine, N,N-diethylaniline, and 2,6-di-tert-butyl-4-methyl aniline, and mixtures thereof. A preferred item 58 relates to the method of any one of items 41 to 57 wherein the activator compound is present in a concentration of 10⁻⁹ mole/cm² to 10⁻⁷ mole/cm². A preferred item 59 relates to the method of any one of items 41 to 58, wherein at least the surface upon which said cyanoacrylate is disposed is a plasma-treated surface. A preferred item 60 relates to the method of item 59, wherein the surface upon which said activator compound is disposed is a plasma-treated surface. A preferred item 61 relates to the method of any one of items 41 to 60, wherein a first acid is mixed in said cyanoacrylate. A preferred item 62 relates to the method of item 61, wherein said first acid is present in a concentration of 50-100,000 ppm. A preferred item 63 relates to the method of item 62, wherein said first acid is present in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm. A preferred item 64 relates to the method of any one of items 41 to 63, wherein a second acid is mixed in said activator. A preferred item 65 relates to the method of item 64, wherein said second acid is present in a concentration of 50-100,000 ppm. A preferred item 66 relates to the method of item 65, wherein said second acid is present in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm. A preferred item 67 relates to the method any one of items 64 to 66 wherein said second acid is the same as said first acid. A preferred item 68 relates to the method of any one of items 41 to 67, wherein the surface upon which said cyanoacrylate is disposed is a polymeric surface which contains acid moieties. A preferred item 69 relates to the method of any one of items 41 to 68 wherein the surface upon which said activator is disposed is a polymeric surface which contains acid moieties. A preferred item 70 relates to the method of item 68 or 69 wherein said acid moieties are carboxylic acid moieties. A preferred item 71 relates to the method of item 70 wherein said carboxylic acid moieties are present as part of coextruded PO/EAA. A preferred item 72 relates to the method of item 71 wherein said coextruded PO/EAA is coextruded PE/EAA, which optionally has been plasma treated. A preferred item 73 relates to the method of item 71 or 72 wherein said carboxylic acid moieties are present in a concentration of from 0.5 to 9 mol% of the EAA in the coextruded PO/EAA. A preferred item 74 relates to the method of any one of items 41 to 73 wherein said second surface is a ribbon which is affixed to a second side of said opening and extends across said opening. A preferred item 75 relates to the method of item 74, wherein said ribbon is made of polyethylene PE, polypropylene (PP), bioriented polypropylene (BOPP), bioriented polyethylene terephthalate (BOPET), combinations thereof and/or a laminate made from them, or co-extruded PE/EAA copolymer. A preferred item 76 relates to the method of items 74 or 75 wherein said ribbon has been affixed to said second side of said opening by heat sealing. A preferred item 77 relates to the method of item 74 or 75 wherein said ribbon is affixed to said second side of said opening by a pressure-sensitive adhesive. A preferred item 78 relates to the method according to any one of items 41 to 77 wherein said cyanocacrylate is enclosed in a space formed by said first or second surface and a piece of material which is removably attached to said first or second surface. A preferred item 79 relates to the method of item 78 wherein said piece of material is formed from PE or co-extruded PE/EAA. A preferred item 80 relates to the method of item 78 or 79 wherein said space is formed by said second surface and said piece of material. A preferred item 81 relates to the method of any one of items 78 to 80 wherein said piece of material is attached to said first or second surface so as to form a plurality of discrete spaces, at least two of which enclose cyanoacrylate therein. A preferred item 82 relates to the method of any one of items 78 to 81 wherein said piece of material is removably attached to said first or second surface by heat sealing. A preferred item 83 relates to the method of any one of items 78 to 81 wherein said piece of material is removably attached to said first or second surface by a PSA. A preferred item 84 relates to the method of any one of items 78 to 83 wherein said piece of material is removably attached to said first or second surface by a combination of heat sealing and PSA.

### Example 1

The bonding of a cyanoacrylate-based adhesive (polymerized NC-C(=CH₂)-COOR, wherein R is ethyl to an activated PE surface was compared to the bonding of two "fast-curing" adhesives, an acrylic-based "No Mix" adhesive from Henkel (Loctite 330, which according to its Material Safety Data Sheet contains primarily tetrahydrofurfuryl methacrylate (30-60 wt.%), as well as 5-10 wt.% methacrylic acid, 5-10 wt.% unspecified alkyl methacrylate, 1-5 wt.% unspecified epoxy resin, 1-5 wt.% unspecified methacrylate monomer, 0.1-1 wt.% talc, 0.1-1 wt.% cumene hydroperoxide, and 0.1-1 wt.% 1,1,2-trichloroethane) and an epoxy adhesive from Huntsman (Bostic Araldite Rapid Resin, containing primarily bisphenol A-epichlorohydrin epoxy resin (60-100 wt.% and butanedioldiglycidyl ether (5-10 wt.%). In each case, two strips of PE were coated with EEA copolymer and the resulting product was plasma-treated. The adhesive was then applied to one strip and the activator or hardener (if required) applied to the other strip, and the two strips were brought together and pressed together for a few seconds using manual pressure. Bond strength was tested by seeing how easily, if at all, the two strips could be manually separated. The results are presented in Table 1 below.

| Adhesive | Activator / Hardener | Bond strength | | | |
|---|---|---|---|---|---|
| | | after 5 min | after 30 min | after 5h | after 24h |
| Modified Cyanoacrylate Adhesive | MOBIZ-1 Amine Type Activator* | No peeling | No peeling | No peeling | No Peeling |
| Loctite 330 Acrylic No-Mix Adhesive | Loctite 7387 Activator | Very easy peeling | Easy peeling | Can be peeled out by hands | Can be peeled out by hands |
| Araldite Rapid Epoxy Adhesive | Araldite Rapid, Fast Setting hardener | Very easy peeling | Very easy peeling | Easy peeling | No peeling |

| | | | | | |
|---|---|---|---|---|---|
| *4-N,N-trimethyl aniline, 2% in hexane | | | | | |

## Claims

**1.** A sealable enclosure having an opening defined therein, the sealable enclosure having
(1) adjacent to a first side of said opening a first surface, said first surface having disposed thereon one of (a) a cyanoacrylate of the formula CH₂=C(CN)-COOR where R is alkyl and (b) an activator compound capable of inducing polymerization of said cyanoacrylate;
(2) adjacent to a second side of said opening a second surface, said second surface being positioned or positionable in opposing relationship to said first surface whereby, when said second surface is sealed to said first surface, said opening is substantially closed, said second surface having disposed thereupon either (i) an activator compound capable of inducing polymerization of said cyanoacrylate, if said cyanoacrylate is disposed on said first surface or (ii) a cyanoacrylate of the formula CH₂=C(CN)-COOR where R is alkyl, if said activator compound is disposed on said first surface,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

**2.** The sealable enclosure of claim 1 which is an envelope.

**3.** The sealable enclosure of claim 1 or 2 wherein said PO is selected from polyethylene (PE) and polypropylene, and said PO/EAA is PE/EAA.

**4.** The sealable enclosure at least one of claims 1 to 3 wherein at least one of said first surface and said second surface is plasma-treated PO or plasma-treated PO/EAA which is selected from the group consisting of plasma-treated PE, plasma-treated PP, and plasma-treated PE/EAA.

**5.** The sealable enclosure of at least one of claims 1 to 4, wherein R is C₁₋₆ alkyl, preferably methyl or ethyl.

**6.** The sealable enclosure of at least one of claims 1 to 5, wherein said activator compound is an amine, preferably selected from the group consisting of triethylenetetramine, tetraethylenepentamine, diethylaminopropylamine, N-aminoethylpiperazine, m-xylylenediamine, m-phenylenediamine, diaminodiphenylmethane, diaminodiphenylsulfone, isophoronediamine, 2,4,6-tris (dimethylaminomethyl) phenol, p-toluidine, N,N-diethylaniline, and 2,6-di-tert-butyl-4-methyl aniline, and mixtures thereof

**7.** The sealable enclosure of at least one of claims 1 to 6 wherein the activator compound is present in a concentration of 10⁻⁹ mole/cm² to 10⁻⁷ mole/cm².

**8.** The sealable enclosure of at least one of claims 1 to 7, wherein at least the surface upon which said cyanoacrylate is disposed is a plasma-treated surface and wherein, optionally, the activator compound is an amine and the surface upon which said amine is disposed is a plasma-treated surface.

**9.** The sealable enclosure of at least one of claims 1 to 8, wherein a first acid is mixed in said cyanoacrylate and is present in a concentration of 50-100,000 ppm, preferably in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm; and, optionally, wherein a second acid is mixed in said activator and is present in a concentration of 50-100,000 ppm, preferably in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm.

**10.** The sealable enclosure of at least one of claims 1 to 9, wherein the surface upon which said cyanoacrylate is disposed is a polymeric surface which contains acid moieties and,optionally, the surface upon which said activator is disposed is a polymeric surface which contains acid moieties, preferably carboxylic acid moieties, preferably which carboxylic acid moieties are present as part of coextruded PO/EAA.

**11.** The sealable enclosure of at least one of claims 1 to 10 wherein said second surface is a ribbon which is affixed to a second side of said opening and extends across said opening, preferably wherein said ribbon is made of polyethylene PE, polypropylene (PP), bioriented polypropylene (BOPP), bioriented polyethylene terephthalate (BOPET), combinations thereof and/or a laminate made from them, or co-extruded PE/EAA copolymer. 12. The sealable enclosure according to at least one of claims 1 to 11 wherein said cyanocacrylate is enclosed in a space formed by said first or second surface and a piece of material which is removably attached to said first or second surface, preferably wherein (i) said piece of material is formed from PE or co-extruded PE/EAA and/or (ii) said piece of material is attached to said first or second surface so as to form a plurality of discrete spaces, at least two of which enclose cyanoacrylate therein.

**13.** A method for preparing an enclosure having an opening defined therein for sealing, comprising:
(a)
(1) forming a cyanoacrylate-bearing first surface adjacent to a first side of said opening, the cyanoacrylate having the formula CH₂=C(CN)-COOR where R is alkyl; and
(2) forming an activator-bearing second surface adjacent to a second side of said opening, which second surface is positioned or positionable in opposing relationship to said first surface whereby, when said second surface is sealed to said first surface, said opening is substantially closed, said activator being a compound capable of inducing polymerization of said cyanoacrylate; or
(b)
(1) forming an activator-bearing first surface adjacent to a first side of said opening, the activator being a compound capable of inducing polymerization in a cyanoacrylate of the formula CH₂=C(CN)-COOR where R is alkyl; and
(2) forming a cyanoacrylate-bearing second surface adjacent to a second side of said opening, which second surface is positioned or positionable in opposing relationship to said first surface whereby, when said second surface is sealed to said first surface, said opening is substantially closed, said cyanoacrylate being of the formula CH₂=C(CN)-COOR where R is alkyl,
wherein each of said first surface and said second surface is independently selected from the group consisting of polyolefin (PO), co-extruded polyolefin/ethylene acrylic acid copolymer (PO/EAA), plasma-treated PO, plasma-treated PO/EAA, and plasma-treated ethylene-vinylacetate (EVA).

**14.** The method of claims 13 wherein at least one of the following is true: (a) said enclosure is an envelope; (b) said PO is selected from polyethylene (PE) and polypropylene; (c) said PO/EAA is PE/EAA; (d) at least one of said first surface and said second surface is plasma-treated PO or plasma-treated PO/EAA, preferably selected from the group consisting of plasma-treated PE, plasma-treated PP, and plasma-treated PE/EAA; (e) R is C₁₋₆ alkyl, preferably methyl or ethyl; (f) said activator compound is an amine, preferably selected from the group consisting of triethylenetetramine, tetraethylenepentamine, diethylaminopropylamine, N-aminoethylpiperazine, m-xylylenediamine, m-phenylenediamine, diaminodiphenylmethane, diaminodiphenylsulfone, isophoronediamine, 2,4,6-tris (dimethylaminomethyl) phenol, p-toluidine, N,N-diethylaniline, and 2,6-di-tert-butyl-4-methyl aniline, and mixtures thereof; (g) the activator compound is present in a concentration of 10⁻⁹ mole/cm² to 10⁻⁷ mole/cm²; (h) at least the surface upon which said cyanoacrylate is disposed is a plasma-treated surface; the surface upon which said cyanoacrylate is disposed is a plasma-treated surface and the surface upon which said amine is disposed is a plasma-treated surface; (i) a first acid is mixed in said cyanoacrylate, said first acid being present in a concentration of 50-100,000 ppm, preferably in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm (j) a second acid is mixed in said activator, said second acid being present in a concentration of 50-100,000 ppm, preferably in a concentration of not more than 90,000 ppm, not more than 80,000 ppm, not more than 70,000 ppm, not more than 60,000 ppm, not more than 50,000 ppm, not more than 40,000 ppm, not more than 30,000 ppm, not more than 20,000 ppm, not more than 10,000 ppm, not more than 5,000 ppm, not more than 1,000 ppm, not more than 500 ppm, or not more than 100 ppm; (k) the surface upon which said cyanoacrylate is disposed is a polymeric surface which contains acid moieties, preferably carboxylic acid moieties which are present as part of coextruded PO/EAA; (1) the surface upon which said activator is disposed is a polymeric surface which contains acid moieties , preferably carboxylic acid moieties which are present as part of coextruded PO/EAA; (m) said second surface is a ribbon which is affixed to a second side of said opening and extends across said opening, said ribbon being made of polyethylene PE, polypropylene (PP), bioriented polypropylene (BOPP), bioriented polyethylene terephthalate (BOPET), combinations thereof and/or a laminate made from them, or co-extruded PE/EAA copolymer; (n) said cyanocacrylate is enclosed in a space formed by said first or second surface and a piece of material which is removably attached to said first or second surface, said piece of material is formed from PE or co-extruded PE/EAA.
